# FASCICULE DE BREVET EUROPEEN

(11) **EP 3 368 865 B1**
(45) Date de publication et mention de la délivrance du brevet: **17.06.2020**
(21) Numéro de dépôt: 16787881.8
(22) Date de dépôt: 28.10.2016
(51) Int. Cl.: G01D 11/30, G01L 19/00, G01L 19/14

(54) **DISPOSITIF DE MESURE DE CARACTERISTIQUE D'UN FLUIDE**
VORRICHTUNG ZUR MESSUNG DER EIGENSCHAFTEN EINER FLÜSSIGKEIT
DEVICE FOR MEASURING CHARACTERISTICS OF A FLUID

(30) Priorité: 30.10.2015 FR 1560428
(43) Date de publication de la demande: 05.09.2018
(73) Titulaire: Commissariat à l'Energie Atomique et aux Energies Alternatives, 75015 Paris (FR)
(72) Inventeur: ROBERT, Philippe, 38000 Grenoble (FR); POLIZZI, Jean-Philippe, 38000 Grenoble (FR)
(74) Mandataire: Brevalex
(86) Numéro de dépôt international: PCT/EP2016/076013
(87) Numéro de publication internationale: WO 2017/072270

(56) Documents cités:
- WO-A1-2010/079004
- WO-A2-2008/036705
- FR-A1- 2 786 564
- US-A- 4 703 658
- US-A- 4 939 497
- US-A1- 2007 013 014

## Description

### DOMAINE TECHNIQUE ET ART ANTÉRIEUR

L'invention porte sur un dispositif et un procédé de mesure d'une ou plusieurs caractéristiques d'un fluide, par exemple la pression, ou encore la force d'un écoulement ou la force pariétale pour déterminer le débit, d'un fluide liquide ou gazeux. L'invention peut s'appliquer notamment à une mesure de pression d'un fluide pour des applications industrielles, automobiles, médicales, avioniques, ou encore grand public, etc.

Les capteurs de gaz, les capteurs de débit ou les capteurs de pression, se retrouvent dans de nombreux domaines d'application. Quel que soit le domaine considéré, la fiabilité et la réduction des coûts de réalisation sont des éléments essentiels qui sont recherchés. Ces aspects doivent être traités au niveau de l'élément sensible, c'est-à-dire du capteur qui est réalisé par exemple sous la forme d'un composant MEMS/NEMS ou d'un composant électronique, mais également au niveau du packaging et de l'assemblage de ce capteur.

Pour assurer le maximum de fiabilité, notamment pour des environnements ayant des contraintes sévères (gaz ou fluides corrosifs, tenue du capteur à haute pression et/ou à haute température), le packaging et l'assemblage du capteur doivent être à même d'offrir :
- une configuration d'assemblage protégeant la connectique vis-à-vis du milieu dans lequel la mesure est réalisée (pour éviter les risques de corrosion, de court-circuit, etc.) ;
- un assemblage du capteur avec le boitier qui soit capable de tenir des hautes pressions (par exemple supérieures à 10 bars) et/ou des chocs en pression, sans risque d'arrachement du capteur ;
- si possible une configuration de packaging limitant les contraintes mécaniques sur le capteur dues à l'assemblage avec le boitier et les contraintes thermiques sur le capteur liées à son report ;
- une approche à bas coût (report et assemblage simple, comportant un nombre limité d'éléments).

Pour protéger la connectique vis-à-vis du milieu dans lequel la mesure est réalisée et répondre au problème de tenue du capteur aux hautes pressions et aux hautes températures, plusieurs solutions existent.

Une première solution consiste à utiliser un gel de protection dispensé à l'intérieur du boitier dans lequel le capteur est encapsulé et qui recouvre la membrane du capteur (qui forme la partie du capteur qui est sensible à la caractéristique mesurée) ainsi que la connectique (plots de contact, fils de connexion). Le boitier comporte un orifice débouchant sur le gel de protection afin que la membrane puisse être soumise à la caractéristique mesurée via le gel de protection.

Cette première solution n'est toutefois pas adaptée aux environnements corrosifs ou aux mesures de caractéristiques de liquides car le gel de protection est perméable à l'humidité et peut se détériorer au contact d'un milieu agressif. De plus, des problèmes d'adhérence et/ou de vieillissement du gel de protection se posent également. En outre, cette première solution ne peut être utilisée que pour des capteurs de pression et non pour d'autres types de capteur (capteur de débit).

Une deuxième solution consiste à encapsuler le capteur dans une cavité remplie d'un fluide non déformable, généralement une huile siliconée. Dans ce cas, le capteur est placé dans un boitier rempli de cette huile. Le boitier est ensuite fermé hermétiquement par un couvercle muni d'une membrane métallique souple afin que le fluide caractérisé et l'huile encapsulant le capteur soient à la même pression. La pression est alors transmise sur le capteur via l'huile.

Toutefois, un tel packaging selon cette deuxième solution est coûteux car complexe à réaliser. Cette solution est complexe à mettre en œuvre car elle nécessite de réaliser une fermeture hermétique du boitier sans créer de pression initiale dans l'huile et sans emprisonner de bulle d'air qui entraverait la bonne transmission de la pression au capteur. En outre, ce type de packaging est source de dérives thermiques liées à l'huile utilisée et sujet au vieillissement de l'huile utilisée. Enfin, cette deuxième solution n'est utilisable que pour un capteur de pression.

Une troisième solution consiste à réaliser un montage du capteur en face arrière (« Backside sense silicon packages »). Suivant cette configuration, la face arrière du capteur, qui comporte la partie sensible à la caractéristique destinée à être mesurée, est solidarisée à une paroi intérieure d'un boitier de protection par exemple via un cordon de scellement. Un orifice traverse le boitier et débouche sur cette partie sensible du capteur afin qu'elle soit exposée au fluide à caractériser. Des éléments de contact électrique du capteur se trouvent sur la face avant du capteur qui est exposée au volume intérieur du boitier de protection. Les éléments de contact électrique et la connectique sont isolés du fluide par le cordon de scellement reliant le capteur au boitier. Le fluide n'est donc en contact qu'avec la partie sensible du capteur qui est par exemple en silicium.

Cette solution limite les dérives en température et le coût du packaging par rapport à la deuxième solution exposée précédemment, et confère une protection plus efficace vis-à-vis des fluides corrosifs que la première solution utilisant le gel de protection.

Par contre, cette troisième solution pose des problèmes de tenue à haute pression (typiquement supérieures à environ 10 bars), compte tenu du mode de report du capteur (en face arrière) sur le boitier qui le rend sensible à l'arrachement en cas de surpression.

Le document WO 2010/079004 décrit une autre solution dans laquelle le capteur est assemblé sur une face avant d'un substrat par flip-chip afin de relier électriquement et mécaniquement le capteur au substrat. Du fait que les connexions électrique et mécanique entre le capteur et le substrat sont obtenues simultanément par la mise en œuvre d'une même étape, cela limite les configurations possibles et est de plus difficile à réaliser technologiquement. Par ailleurs, la connexion électrique du capteur se fait sur la face avant du substrat qui est en contact avec le fluide.

### EXPOSÉ DE L'INVENTION

Un but de la présente invention est de proposer un dispositif de mesure répondant aux problèmes exposés ci-dessus pour les solutions d'assemblage et de packaging de capteur de l'art antérieur, c'est-à-dire permettant :
- de protéger efficacement les connexions électriques du dispositif de mesure vis-à-vis du fluide à caractériser ;
- de réaliser un assemblage capteur/boitier robuste ;
- de limiter les contraintes mécaniques et thermiques sur le capteur ;
- qui puisse être réalisé à faible coût.

Pour cela, la présente invention propose un dispositif de mesure d'au moins une caractéristique d'un fluide, comportant au moins :
- un capteur comprenant une première face principale munie d'au moins une partie sensible à ladite caractéristique et destinée à être en contact avec le fluide, et une deuxième face principale opposée à la première face principale et munie d'au moins un premier élément de contact électrique sur lequel au moins un signal de mesure du capteur est apte à être obtenu ;
- un support comprenant une première face principale munie d'au moins un deuxième élément de contact électrique relié électriquement au premier élément de contact électrique, une deuxième face principale opposée à la première face principale du support, et au moins une ouverture traversant les première et deuxième faces principales du support ;
dans lequel la deuxième face principale du capteur est solidarisée de manière étanche et/ou hermétique à la deuxième face principale du support au moins au niveau de la périphérie de l'ouverture et telle qu'au moins une partie du premier élément de contact électrique soit disposée en regard de et/ou dans l'ouverture, et dans lequel la partie sensible du capteur est déportée latéralement par rapport à l'ouverture du support et n'est pas entourée par une région du capteur solidarisée au support.

Dans un tel dispositif de mesure, les éléments de contact électrique du capteur et du support sont disposés du même côté du dispositif, opposé à celui destiné à être en contact avec le fluide à caractériser. Ces éléments de contact électrique sont bien protégés vis-à-vis du fluide à caractériser en raison de la solidarisation hermétique et/ou étanche entre le capteur et le support, isolant ainsi hermétiquement et/ou de manière étanche les deux côtés opposés du dispositif. Un tel dispositif de mesure est donc utilisable pour caractériser un fluide agressif ou corrosif ou électriquement conducteur.

De plus, dans un tel dispositif de mesure, le capteur est assemblé de manière robuste au support, sans que le capteur n'ait à subir des contraintes de traction risquant de provoquer son arrachement du support.

Le support peut être avantageusement de type céramique ou verre, ce qui permet de minimiser les contraintes qui seraient occasionnées par une différence de coefficients de dilatation thermique entre le capteur et le support. Toutefois, le support peut correspondre à d'autres types de boitiers tels que : TO, plastique, CSP (« Chip Scale Package »), etc.

Un tel dispositif de mesure a également pour avantage de pouvoir être réalisé à bas coût.

Dans le dispositif selon l'invention, le support peut être plan, c'est-à-dire peut correspondre à une couche ou une plaque.

Dans le dispositif de mesure, les connexions électriques et les connexions mécaniques peuvent ne pas être réalisées simultanément, les connexions électriques et mécaniques entre le capteur et le support n'étant pas réalisées sur la même face du support.

Le capteur peut correspondre à un capteur de pression (absolue ou différentielle), à un capteur de débit d'un fluide liquide ou gazeux. Le capteur peut également correspondre à un microphone, ou correspondre à n'importe quel capteur par exemple de type MEMS/NEMS (« Micro-Electro-Mechanical System/Nano-Electro-Mechanical System »).

La solidarisation entre la deuxième face principale du capteur et la deuxième face principale du support peut être étanche lorsque le fluide correspond à un liquide. Lorsque le fluide est gazeux, cette solidarisation peut être hermétique.

La deuxième face principale du support peut être destinée à être en contact avec le fluide.

La partie sensible du capteur peut comporter au moins une membrane, le capteur pouvant être de type piézorésistif ou capacitif ou piézoélectrique ou thermique.

La deuxième face principale du capteur peut être solidarisée à la deuxième face principale du support par au moins un cordon de scellement hermétique et/ou étanche ou par collage direct.

Le dispositif comporte au moins un capot solidarisé à la deuxième face principale du capteur et délimitant, avec la deuxième face principale du capteur, au moins une cavité fermée hermétiquement en regard de laquelle est disposée au moins la partie sensible du capteur. Une telle configuration permet notamment de former un vide dans la cavité. Ainsi, la partie sensible du capteur n'est pas soumise à une pression provenant du côté de la deuxième face principale du capteur, et peut donc mesurer en valeur absolue la pression du côté de la première face principale du capteur, et donc la pression du fluide en valeur absolue.

La deuxième face principale du support peut être solidarisée de manière hermétique et/ou étanche au capot qui est solidarisé hermétiquement à la deuxième face principale du capteur. Ainsi, la liaison mécanique hermétique et/ou étanche entre la deuxième face principale du support et la deuxième face principale du capteur est réalisée par l'intermédiaire du capot.

Le deuxième élément de contact électrique peut être relié électriquement au premier élément de contact électrique par au moins une liaison électrique traversant le capot. Une telle liaison électrique peut correspondre par exemple à un via conducteur formé dans le capot ou toute liaison électrique passant par une ouverture formée dans le capot.

La partie sensible du capteur est déportée latéralement par rapport à l'ouverture du support, c'est-à-dire ne pas être disposée en regard de l'ouverture. Cette configuration permet d'obtenir un meilleur découplage mécanique et thermique du capteur par rapport à la région de solidarisation du capteur au support située en périphérie de l'ouverture du support. En outre, dans cette configuration, la partie sensible du capteur peut ne pas être entourée par une région du capteur solidarisée au support. Ainsi, les contraintes mécaniques générées par l'assemblage étanche et/ou hermétique entre la deuxième face principale du support et la deuxième face principale du capteur, au niveau de la région du capteur solidarisée au support, n'impactent pas la partie sensible du capteur, et donc le fonctionnement du capteur, notamment dans le cas d'un capteur de pression dont le principe de mesure est intrinsèquement sensible aux contraintes mécaniques. La région du capteur solidarisée au support correspond dans ce cas aux parties du capteur en contact, directement ou non, avec le support ou avec le cordon de scellement. Autrement dit, une projection de la surface de la partie sensible dans un plan parallèle à la deuxième face principale du capteur ne se superpose pas à une projection, dans ce même plan, de la région du capteur solidarisée au support.

Le dispositif peut comporter en outre au moins un matériau de protection recouvrant au moins une partie de la deuxième face principale du capteur et au moins une partie du deuxième élément de contact électrique. Une protection supplémentaire peut ainsi être apportée aux éléments recouverts par ce matériau de protection, par exemple un gel ou un couvercle de protection.

Le dispositif peut comporter en outre un élément de support disposé entre le deuxième élément de contact électrique et la première face principale du support. Cette configuration est avantageuse lorsque le support est réalisé à partir d'un matériau non compatible avec la réalisation d'éléments de contact électrique sur celui-ci.

Dans une configuration particulière, le dispositif peut être tel que :
- le support fait partie d'au moins un boitier entourant le capteur en formant au moins un premier volume dans lequel la partie sensible du capteur est disposée et un deuxième volume dans lequel le premier élément de contact électrique et une partie du deuxième élément de contact électrique sont disposés,
- le support et le capteur forment une séparation hermétique et/ou étanche entre les premier et deuxième volumes,
- le boitier est muni d'au moins un orifice débouchant dans le premier volume,
- le deuxième élément de contact électrique traverse le boitier et comporte une extrémité disposée en dehors du boitier.

Cette configuration permet notamment d'apporter une protection supplémentaire du capteur.

Dans une autre configuration, le dispositif peut comporter en outre au moins un couvercle de protection solidarisé à la première face principale du support et formant, avec le support et le capteur, au moins un volume dans lequel se trouvent le premier élément de contact électrique et une partie du deuxième élément de contact électrique, le deuxième élément de contact électrique traversant le support et comportant une extrémité disposée en dehors du volume.

Le volume formé par le couvercle de protection peut être fermé hermétiquement et/ou de manière étanche, ou le couvercle de protection peut être traversé par au moins un orifice débouchant dans le volume.

Un tel couvercle de protection apporte une protection supplémentaire au capteur et aux éléments de contact électrique du dispositif. De plus, lorsque le volume est fermé hermétiquement, il est possible de former un vide dans ce volume. Ainsi, la partie sensible du capteur n'est pas soumise à une pression provenant du côté de la deuxième face principale du capteur, et peut donc mesurer en valeur absolue la pression du côté de la première face principale du capteur, et donc la pression du fluide en valeur absolue. Lorsque le couvercle de protection est traversé par au moins un orifice débouchant dans le volume, le dispositif peut réaliser une mesure de pression relative ou différentielle entre la pression appliquée par le fluide sur la partie sensible du capteur et la pression subie par le capteur du côté de la première face principale du capteur.

Le deuxième élément de contact électrique peut être relié électriquement au premier élément de contact électrique par l'intermédiaire d'un élément électrique et/ou électronique disposé sur la première face principale du support.

L'invention porte également sur un ensemble de mesure comprenant au moins un dispositif de mesure tel que défini précédemment et un conduit, ou tuyau, dans lequel le fluide est apte à circuler, dans lequel la deuxième face principale du support du dispositif de mesure est solidarisée hermétiquement et/ou de manière étanche à une extrémité ou à une paroi du conduit telle que la partie sensible du capteur soit exposée à l'intérieur du conduit par l'intermédiaire de l'extrémité ou d'une ouverture formée dans la paroi du conduit.

L'invention porte également sur un procédé de réalisation d'un dispositif de mesure d'au moins une caractéristique d'un fluide, comprenant au moins les étapes suivantes :
- réalisation d'au moins un capteur comprenant une première face principale munie d'au moins une partie sensible à ladite caractéristique et destinée à être en contact avec le fluide, et une deuxième face principale opposée à la première face principale et munie d'au moins un premier élément de contact électrique sur lequel au moins un signal de mesure du capteur est apte à être obtenu ;
- réalisation d'au moins un support comprenant une première face principale munie d'au moins un deuxième élément de contact électrique, une deuxième face principale opposée à la première face principale du support, et au moins une ouverture traversant les première et deuxième faces principales du support ;
- solidarisation hermétique et/ou étanche de la deuxième face principale du capteur à la deuxième face principale du support au moins au niveau de la périphérie de l'ouverture et telle qu'au moins une partie du premier élément de contact électrique soit disposée en regard de et/ou dans l'ouverture ;
- réalisation d'une liaison électrique reliant le deuxième élément de contact électrique au premier élément de contact électrique;
   et dans lequel la partie sensible du capteur est déportée latéralement par rapport à l'ouverture du support et n'est pas entourée par une région du capteur solidarisée au support.

Le procédé comporte également, entre la réalisation du support et la solidarisation du capteur au support, une étape de solidarisation d'un capot à la deuxième face principale du capteur et délimitant, avec la deuxième face principale du capteur, au moins une cavité fermée hermétiquement en regard de laquelle est disposée au moins la partie sensible du capteur.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1 et 2 représentent un dispositif de mesure respectivement selon un premier et un deuxième modes de réalisation ;
- la figure 3 représente un ensemble de mesure selon un mode de réalisation particulier;
- les figures 4 à 14 représentent un dispositif de mesure, objet de la présente invention, selon différents modes de réalisation ;
- les figures 15A à 15D représentent les étapes d'un procédé de réalisation d'un dispositif de mesure, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

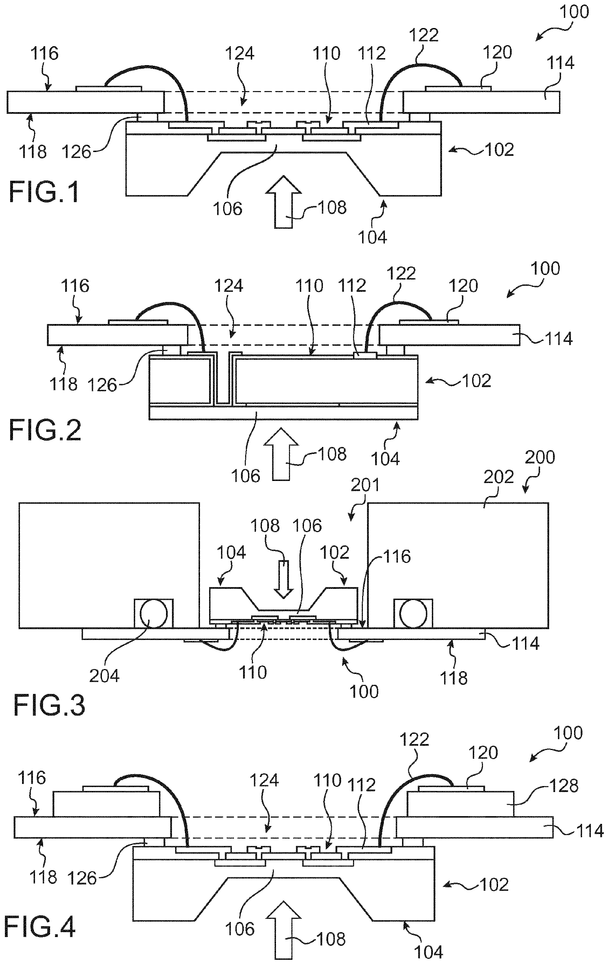

On se réfère tout d'abord à la figure 1 qui représente un dispositif de mesure 100 selon un premier mode de réalisation. Dans ce premier mode de réalisation, le dispositif 100 correspond à un dispositif de mesure de pression ou de variation de pression d'un fluide.

Le dispositif 100 comporte un capteur 102 qui correspond ici à un capteur de pression de type MEMS. Le capteur 102 comporte une première face principale 104 munie d'une partie 106 sensible à la ou aux caractéristiques du fluide à mesurer, c'est-à-dire ici une partie sensible à la pression exercée par le fluide. Sur la figure 1, la pression exercée par le fluide sur le capteur 102 est symbolisée par la flèche référencée 108. Cette partie 106 est formée ici par une région amincie du substrat du capteur 102, cette région formant une membrane agissant comme un transducteur électromécanique sensible à la pression du fait que cette membrane comprend un matériau piézorésistif.

Le capteur 102 comporte également une deuxième face principale 110, opposée à la première face principale 104, sur laquelle est réalisé au moins un premier élément de contact électrique 112 correspondant à un plot de contact sur lequel le signal de mesure de pression délivré par le capteur 102 est obtenu. Sur la figure 1, le capteur 102 comporte plusieurs premiers éléments de contact électrique 112 disposés sur la deuxième face principale 110.

La première face principale 104 du capteur 102 est destinée à être en contact avec le fluide dont la pression est mesurée, et la deuxième face principale 110 du capteur 102 est destinée à être isolée hermétiquement et/ou de manière étanche vis-à-vis du fluide. Lorsque la deuxième face principale 110 du capteur 102 est soumise à une pression ambiante régnant du côté de cette face, le dispositif 100 forme alors un dispositif de mesure de pression différentielle mesurant la différence entre la pression à laquelle est soumise la première face principale 104 (pression du fluide) et celle régnant du côté de la deuxième face principale 110. Si un vide est formé du côté de la deuxième face principale 110, le dispositif 100 forme alors un dispositif de mesure de pression absolue mesurant la valeur absolue de la pression exercée par le fluide sur le capteur 102.

Le dispositif 100 comporte également un support 114 comprenant une première face principale 116 et une deuxième face principale 118 opposée à la première face principale 116. Le support 114 est ici plan et est par exemple formé par une plaque de céramique ou de verre sur laquelle sont déposées des pistes conductrices par exemple par sérigraphie. En variante, le support 114 peut correspondre à une plaque de type PCB (« Printed Circuit Board », ou carte de circuit imprimé). Des deuxièmes éléments de contact électrique 120 (le support 114 comporte au moins un deuxième élément de contact électrique 120) sont disposés sur la première face principale 116 du support 114 et sont reliés électriquement aux premiers éléments de contact électrique 112 par des fils électriques 122 ou tout autre moyen de liaison électrique adapté. Le support 114 comporte également une ouverture 124 traversant toute l'épaisseur du support 114, c'est-à-dire formée à travers les première et deuxième faces principales 116, 118 du support 114.

La deuxième face principale 110 du capteur 102 est solidarisée de manière hermétique et/ou étanche à la deuxième face principale 118 du support 114. Dans le mode de réalisation représenté sur la figure 1, cette solidarisation hermétique et/ou étanche est obtenue par un cordon de scellement 126 formé au niveau de la périphérie de l'ouverture 124 du support 114 et autour des premiers éléments de contact électrique 112. Le cordon de scellement 126 peut correspondre à un cordon de matériau métallique, polymère (dans le cas d'une solidarisation étanche mais pas hermétique), de verre fusible, etc. Les premiers éléments de contact électrique 112 et la partie sensible 106 sont disposés en regard de l'ouverture 124. Les fils électriques 122 traversent le support 114 au niveau de cette ouverture 124.

Etant donné la solidarisation hermétique et/ou étanche formée par le cordon de scellement 126 entre le capteur 102 et le support 114, la deuxième face principale 118 du support 114 peut être en contact avec le fluide, mais pas la première face principale 116 du support 114. Ainsi, toute la connectique du dispositif de mesure 100, c'est-à-dire les premiers et deuxièmes éléments de contact électrique 112, 120, sont protégés hermétiquement et/ou de manière étanche vis-à-vis du fluide grâce à la solidarisation hermétique et/ou étanche entre les deux faces principales 110, 118 formant une barrière hermétique et/ou étanche vis-à-vis du fluide.

La figure 2 représente le dispositif de mesure 100 selon un deuxième mode de réalisation.

Contrairement au premier mode de réalisation précédemment décrit dans lequel le capteur 102 est un capteur de pression à membrane piézorésistive, le capteur 102 du dispositif 100 selon le deuxième mode de réalisation correspond à un capteur de pression capacitif dans lequel les mouvements de la membrane correspondant à la partie sensible 106 du capteur 102 sont transformés électriquement via un changement de la valeur d'une capacité électrique de la partie sensible 106. Les autres éléments du dispositif 100 selon ce deuxième mode de réalisation sont similaires à ceux du dispositif 100 précédemment décrit en liaison avec la figure 1.

La figure 3 représente un exemple de montage d'un dispositif de mesure 100, ici similaire au dispositif 100 précédemment décrit en liaison avec la figure 1, dans un conduit, ou tuyau, 202, correspondant par exemple à une canalisation métallique ou plastique, dans lequel circule le fluide dont la pression est destinée à être mesurée, qui forment un ensemble de mesure 200. Le dispositif 100 est solidarisé hermétiquement et/ou de manière étanche à une extrémité du conduit 202, ou une paroi du conduit 202 au niveau d'une ouverture 201 formée dans cette paroi, tel que la partie sensible 106 du capteur 102 soit exposée à l'intérieur du conduit 202. Cette solidarisation est réalisée entre la paroi du conduit 202 et la deuxième face principale 116 du support. L'étanchéité de cette liaison est assurée dans cet exemple par un joint torique 204 disposé sur la paroi du conduit 202 à laquelle le dispositif 100 est solidarisé par exemple par serrage mécanique. Ainsi, le fluide circulant dans le conduit 202 exerce une pression sur la partie sensible 106 du capteur 102 et les éléments de contact électrique 112 et 120 du capteur 102 et du support 114 ne sont pas exposés à ce fluide.

La figure 4 représente un dispositif de mesure 100 selon un troisième mode de réalisation.

Par rapport au premier mode de réalisation, les deuxièmes éléments de contact électrique 120 ne sont pas disposés directement sur la première face principale 116 du support 114, mais sont disposés sur un élément de support 128 lui-même disposé sur la première face principale 116 du support 114. Sans la présence de l'élément de support 128 (comme dans les premier et deuxième modes de réalisation précédemment décrits), le matériau du support 114 doit être à la fois compatible avec le fluide dont la caractéristique est mesurée, apte à former une barrière d'étanchéité et/ou hermétique vis-à-vis de ce fluide, et permettre la réalisation des deuxièmes éléments de contact électrique 120 sur sa première face principale 116. Dans ce troisième mode de réalisation, la compatibilité avec le fluide dont la caractéristique est mesurée et la capacité à former une barrière d'étanchéité et/ou hermétique vis-à-vis de ce fluide sont dissociée de la compatibilité de réalisation des deuxièmes éléments de contact électrique 120, du fait que seul le matériau de l'élément de support 128 doit être apte à permettre la réalisation des deuxièmes éléments de contact électrique 120 sur celui-ci. L'élément de support 128 correspond par exemple à un circuit imprimé.

La réalisation d'un tel élément de support 128 est compatible avec les modes de réalisation précédemment décrits.

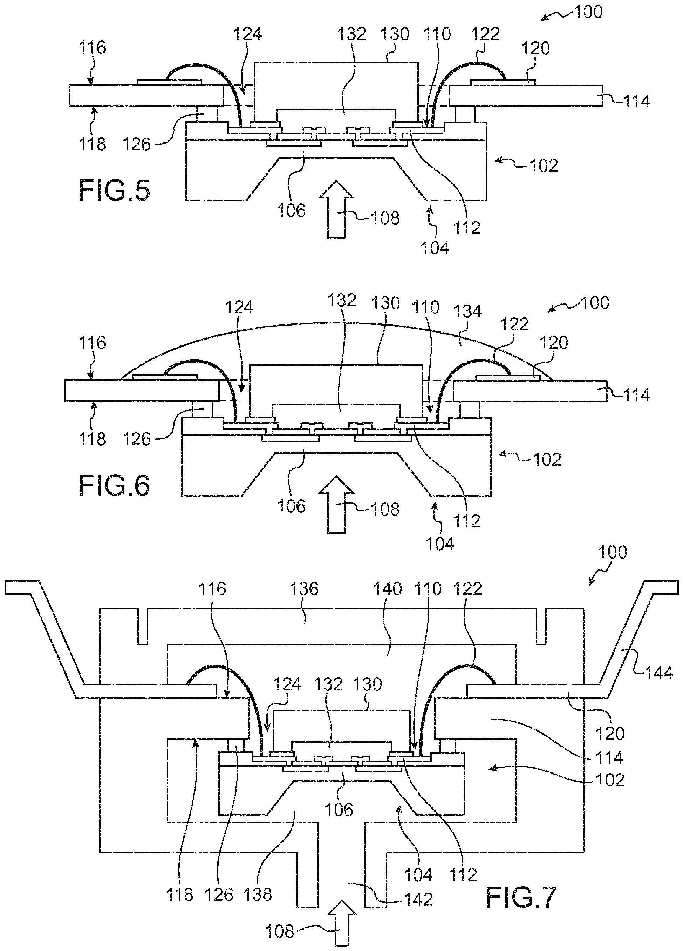

La figure 5 représente un dispositif de mesure 100 selon un quatrième mode de réalisation.

Par rapport au premier mode de réalisation, le dispositif 100 comporte en outre un capot 130 solidarisé à la deuxième face principale 110 du capteur 102 et délimitant, avec cette deuxième face principale 110, une cavité 132 fermée hermétiquement, par exemple sous vide, au niveau de la partie de la deuxième face principale 110 qui se trouve en regard de la partie sensible 106. Outre la protection mécanique apportée par la présence de ce capot 130, la cavité 132 sous vide permet au dispositif 100 de réaliser une mesure de la valeur absolue de la pression du fluide 108 du fait que la partie de la deuxième face principale 110 se trouvant face à l'élément sensible 106 n'est pas soumise à la pression ambiante régnant du côté de la deuxième face principale 110. Pour former cette cavité 132 sous vide, le capot 130 est scellé sous vide à la deuxième face principale 110. De plus, les premiers éléments de contact électrique 112 sont sortis de la cavité 132 en formant des traversées hermétiques depuis l'intérieur de la cavité 132 vers l'extérieur de cette cavité 132 afin que ces contacts soient accessibles depuis l'extérieur de la cavité 132 et puissent être reliés électriquement aux deuxièmes éléments de contact électrique 120.

La réalisation du capot 130 et de la cavité 132 est compatible avec les différents modes de réalisation précédemment décrits.

La figure 6 représente un dispositif de mesure 100 selon un cinquième mode de réalisation.

Par rapport au quatrième mode de réalisation précédemment décrit en liaison avec la figure 5, le dispositif 100 comporte un matériau de protection 134, qui correspond à un gel de protection sur l'exemple de la figure 6 mais qui pourrait être par exemple réalisé sous la forme d'un couvercle de protection ou sous une autre forme, recouvrant ici la deuxième face principale 110 du capteur 102 ainsi que les deuxièmes éléments de contact électrique 120 et les fils 122. Tous les éléments de connexion électrique du dispositif 100 sont ici protégés par le matériau de protection 134. En l'absence du capot 130 (lorsque le dispositif 100 est destiné à réaliser une mesure de pression différentielle), ce matériau de protection 134 permet également de protéger la partie de la deuxième face principale 110 du capteur 102 qui est ici protégée par le capot 130.

La réalisation du matériau de protection 134 est compatible avec les modes de réalisation précédemment décrits.

La figure 7 représente un dispositif de mesure 100 selon un sixième mode de réalisation.

Dans ce sixième mode de réalisation, le support 114 fait partie d'un boitier 136 entourant le capteur 102. Ce boitier 136 forme un premier volume 138 dans lequel la partie sensible 106 du capteur 102 est disposée et un deuxième volume 140 dans lequel les premiers éléments de contact électrique 112 et une partie des deuxièmes éléments de contact électrique 120 sont disposés. Les premier et deuxième volumes 138, 140 sont isolés hermétiquement l'un de l'autre grâce à la solidarisation hermétique réalisée entre le capteur 102 et le support 114. Le boitier 136 comporte en outre un orifice 142 débouchant dans le premier volume 138 et permettant au fluide d'entrer dans ce premier volume 138 et de venir au contact de la partie sensible 106 du capteur 102. Enfin, les deuxièmes éléments de contact électrique 120 s'étendent sur le support 114 tels qu'ils traversent le boitier 136 et que des extrémités 144 de ces deuxièmes éléments de contact électrique 120 débouchent en dehors du boitier 136.

Ce boitier 136 assure une protection du capteur 102 ainsi que de la connectique du dispositif 100. De plus, selon la pression régnant dans le deuxième volume 140, ce dispositif 100 peut réaliser une mesure de pression absolue ou différentielle même en l'absence du capot 130.

Un tel boitier 136 peut également être réalisé pour les différents modes de réalisation précédemment décrits.

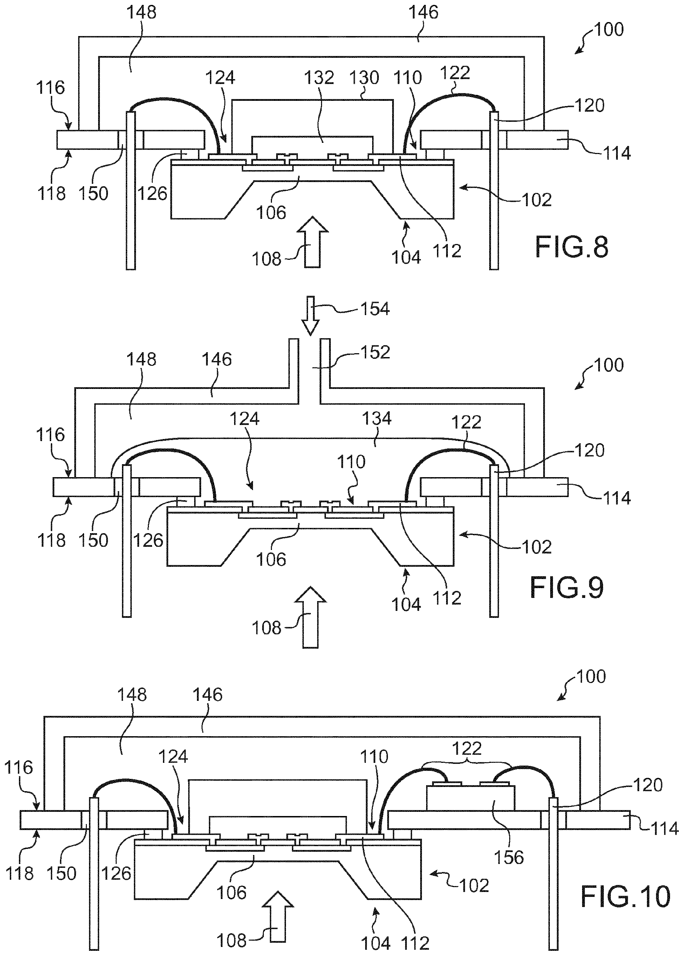

La figure 8 représente un dispositif de mesure 100 selon un septième mode de réalisation.

Dans ce mode de réalisation, le dispositif 100 comporte un couvercle de protection 146 solidarisé à la première face principale 116 du support 114 et formant, avec le support 114 et le capteur 102, un volume 148 dans lequel se trouvent les premiers éléments de contact électrique 110 et une partie des deuxièmes éléments de contact électrique 120. Le couvercle 146 assure une protection de la partie électronique du dispositif 100. Les deuxièmes éléments de contact électrique 120 traversent le support 114 (à travers les faces principales 116, 118 du support 114) afin que ces éléments de contact électrique 120 soient accessibles depuis l'extérieur du volume 148. Un matériau étanche et/ou hermétique 150 présent autour des parties des deuxièmes éléments de contact électrique 120 traversant le support 114 assurent l'étanchéité et/ou l'herméticité entre la deuxième face principale 118 du support 118 et l'intérieur du volume 148. Lorsque le dispositif 100 est destiné à réaliser une mesure de pression absolue du fluide, le volume 148 peut être fermé hermétiquement. Dans ce cas, le capot 130 peut être supprimé.

La réalisation d'un tel couvercle de protection 146 est compatible avec les modes de réalisation précédemment décrits.

La figure 9 représente un dispositif de mesure 100 selon un huitième mode de réalisation.

Comme dans le septième mode de réalisation précédemment décrit, le couvercle de protection 146 est solidarisé à la première face principale 116 du support 114. Toutefois, le couvercle 146 est ici traversé par un orifice 152 mettant ainsi en communication l'intérieur du volume 148 avec l'atmosphère ambiante du côté de la première face principale 116 du support 114, et notamment la pression de cette atmosphère symbolisée par la flèche référencée 154 sur la figure 9. Ainsi, le dispositif 100 réalise ici une mesure de pression différentielle entre la pression 108 du fluide et la pression 154 à laquelle est soumise la deuxième face principale 110 du capteur 102. Dans ce mode de réalisation, la deuxième face principale 110 du capteur 102 est protégée par le matériau de protection 134, ici un gel de protection. Une mesure de pression différentielle est réalisée car ce gel de protection 134 transmet la pression 154 sur la deuxième face principale du capteur 102.

Là encore, la réalisation d'un tel couvercle de protection 146 est compatible avec les modes de réalisation précédemment décrits.

La figure 10 représente un dispositif de mesure 100 selon un neuvième mode de réalisation.

Ce dispositif de mesure 100 comporte tous les éléments de celui précédemment décrit en liaison avec la figure 8. Dans ce neuvième mode de réalisation, la liaison électrique entre l'un des premiers éléments de contact électrique 112 et l'un des deuxièmes éléments de contact électrique 120 n'est pas réalisée directement par un fil 122, mais par l'intermédiaire d'un circuit électrique et/ou électronique 156, par exemple un circuit ASIC (« Application-Specific Integrated Circuit »), une carte électronique, ou plus généralement tout élément électrique et/ou électronique intermédiaire. Sur la figure 10, cet élément 156 est disposé dans le volume 148, sur la première face principale 116 du support 114. Des fils 122 réalisent les liaisons électriques entre le premier élément de contact électrique 112 et le circuit 156, et entre le circuit 156 et le deuxième élément de contact électrique 120.

Une telle liaison électrique « indirecte » entre les deux éléments de contact électrique 112, 120 peut être réalisée pour un ou plusieurs des premiers et deuxièmes éléments de contact électrique 112, 120. De plus, une telle liaison électrique par l'intermédiaire du circuit 156 peut être réalisée dans les différents modes de réalisation précédemment décrits.

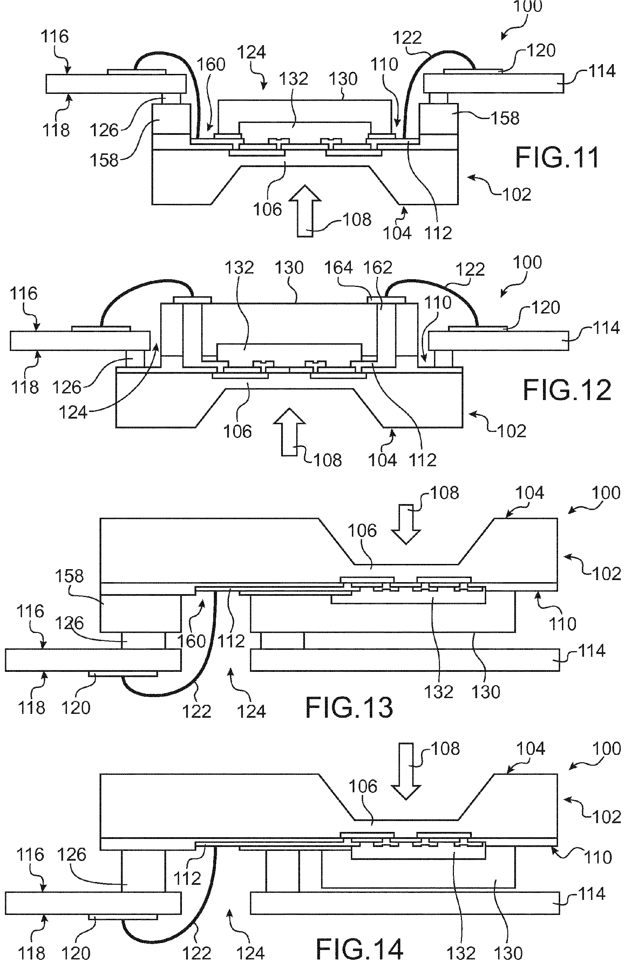

La figure 11 représente un dispositif de mesure 100 selon un dixième mode de réalisation.

Dans ce mode de réalisation, le support 114 n'est pas solidarisé directement sur la deuxième face principale 110 du capteur 102. Le capot 130 est ici réalisé tel qu'il comporte des parties 158 sur lesquelles la deuxième face principale 118 du support 114 est solidarisée hermétiquement par le cordon de scellement 126, le capot 130 (et donc également les parties 158) étant solidarisé hermétiquement à la deuxième face principale 110 du capteur 102. Les deuxièmes éléments de contact électrique 120 sont reliés électriquement aux premiers éléments de contact électrique 112 par l'intermédiaire des fils électriques 122 qui traversent le capot 130 via des ouvertures 160 formées dans les parties 158 du capot 130.

Un tel capot 130 est compatible avec les modes de réalisation précédemment décrits.

La figure 12 représente un dispositif de mesure 100 selon un onzième mode de réalisation.

Dans ce onzième mode de réalisation, le capot 130 a une épaisseur importante et occupe une partie de l'ouverture 124 formée à travers le support 114. De plus, les premiers éléments de contact électrique 112 sont reliés électriquement aux deuxièmes éléments de contact électrique 120 par les fils 122 mais également par des vias conducteurs (ou TSV pour « Through Silicon Via ») 162 qui traversent le capot 130. Un tel mode de réalisation permet, du fait que les plots de contact auxquels sont reliés les fils 122 ne sont pas formés directement par les premiers éléments de contact électrique 112 mais par des plots 164 présents sur le sommet du capot 130 et auxquels sont reliés les vias conducteurs 162, de réaliser le capteur 102 avec une taille réduite. Cela facilite en outre la connexion électrique entre les premiers éléments de contact électrique 112 et les deuxièmes éléments de contact électrique 120.

Un tel capot 130 et les vias conducteurs 162 peuvent être réalisés dans les différents modes de réalisation précédemment décrits.

Dans les modes de réalisation précédemment décrits, le dispositif de mesure 100 est réalisé tel que le ou les premiers éléments de contact électrique 112 soient disposés en regard de l'ouverture 124 traversant le support 114, les liaisons électriques formées par les fils 122 ou les vias conducteurs 162 entre ces premiers éléments de contact électrique 112 et les deuxièmes éléments de contact électrique 120 passant par cette ouverture 124. De plus, dans ces précédents modes de réalisation, la partie sensible 106 du capteur 102 est également disposée en regard de cette ouverture 124.

La figure 13 représente le dispositif de mesure 100 selon un douzième mode de réalisation dans lequel la partie sensible 106 du capteur 102 est déportée latéralement par rapport à l'ouverture 124. Sur cette figure, seul l'un des premiers éléments de contact électrique 112 est disposé en regard de l'ouverture 124. Le fil 122 qui relie ce premier élément de contact électrique 112 au deuxième élément de contact électrique 120 traverse l'ouverture 124 ainsi que le capot 130 grâce à une ouverture 160 formée dans le capot 130. De plus, dans ce douzième mode de réalisation, le support 114 est solidarisé hermétiquement à une partie 158 du capot 130 au niveau de la périphérie de l'ouverture 124 par le cordon de scellement 126, le capot 130 étant lui-même solidarisé hermétiquement au capteur 102.

La figure 14 représente le dispositif de mesure 100 selon un treizième mode de réalisation. Ce dispositif de mesure 100 est sensiblement similaire à celui précédemment décrit en liaison avec la figure 13, excepté que le support 114 est ici solidarisé directement à la deuxième face principale 110 du capteur 102.

Les modes de réalisation représentés sur les figures 13 et 14 ont pour avantage de déporter la partie sensible 106 du capteur 102 vis-à-vis de la zone de scellement entre le support 114 et le capteur 102, ce qui permet d'obtenir un meilleur découplage mécanique et thermique de la partie sensible 106 du capteur 102 vis-à-vis de la zone de scellement. Ce déport de la partie sensible 106 du capteur 102 vis-à-vis de la zone de scellement peut également être réalisé dans les modes de réalisation précédemment décrits.

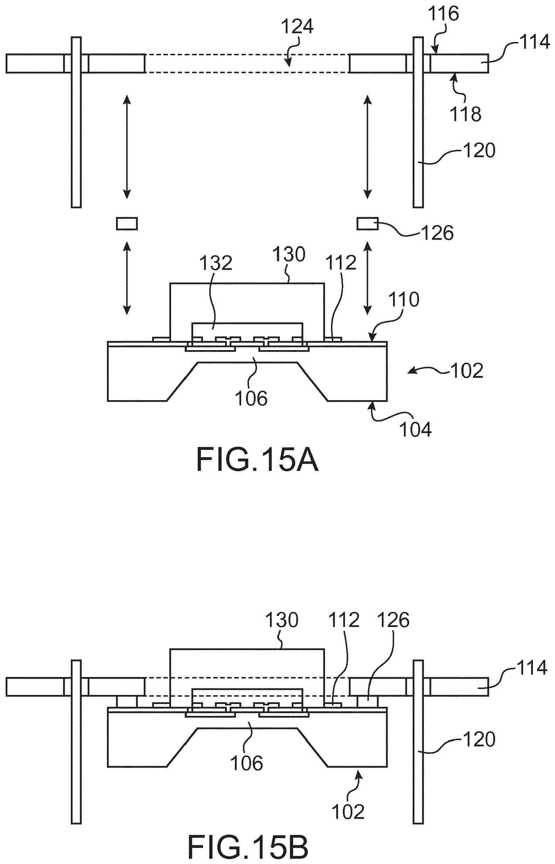

Un procédé de réalisation d'un dispositif de mesure 100, par exemple similaire à celui précédemment décrit en liaison avec la figure 8, est décrit ci-dessous en liaison avec les figures 15A à 15D.

Le capteur 102 est tout d'abord réalisé en technologie MEMS. Le capot 130 est solidarisé hermétiquement sur la première face principale 110 du capteur 102. Le support 114 est également préparé en formant l'ouverture 124 à travers les faces principales 116 et 118 du support 114. Les deuxièmes éléments de contact 120 sont solidarisés au support 114 en les faisant traverser le support 114 comme représenté sur la figure 15A.

Le capteur 102 est tout d'abord aligné avec l'ouverture 124 du support 114, puis solidarisé hermétiquement au support 114 par brasure, avec le cordon de scellement 126 (figure 15B).

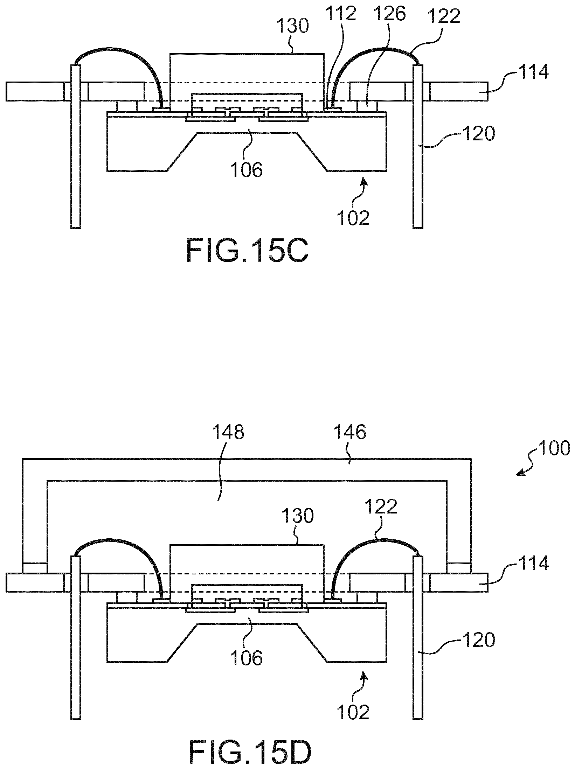

Les liaisons électriques entre les premiers éléments de contact électrique 112 et les deuxièmes éléments de contact électrique 120 sont ensuite réalisés en connectant les fils 122 à ces éléments (figure 15C).

Enfin, comme représenté sur la figure 15D, le dispositif de mesure 100 est achevé en scellant le couvercle de protection 146 sur la première face principale 116 du support 114. Ce scellement est par exemple réalisé par soudure par résistance, brasure, collage, verre fusible, ou toute autre technique de scellement adaptée.

Dans tous les modes de réalisation précédemment décrits, le dispositif de mesure 100 correspond à un dispositif de mesure de pression d'un fluide, le capteur 102 correspondant à un capteur de pression. Il est toutefois possible que le capteur 102 soit apte à mesurer une ou plusieurs caractéristiques du fluide autres que la pression, ou corresponde à un autre type de capteur, par exemple un microphone.

Dans les différents modes de réalisation précédemment décrits, la solidarisation hermétique et/ou étanche entre le capteur 102 et le support 114 est réalisée par le cordon de scellement 126. En variante, il est possible que la solidarisation entre le capteur 102 et le support 114 soit réalisée par la mise en œuvre d'un collage direct, également appelé collage par adhésion moléculaire, entre le capteur 102 et le support 114. En fonction de la nature des matériaux destinés à être solidarisés l'un à l'autre, ce collage direct peut être mis en œuvre en faisant appel ou non à des portions de matériaux adaptées et déposées au préalable sur le capteur 102 et le support 114, par exemple des portions de SiO₂.

En outre, les liaisons électriques entre les premiers et deuxièmes éléments de contact électrique peuvent être formés par des éléments de liaison différents que ceux précédemment décrits, comme par exemple des billes conductrices ou tout autre moyen adapté.

## Revendications

1. Dispositif (100) de mesure d'au moins une caractéristique d'un fluide (108), comportant au moins :
- un capteur (102) comprenant une première face principale (104) munie d'au moins une partie sensible (106) à ladite caractéristique et configurée pour être en contact avec le fluide, et une deuxième face principale (110) opposée à la première face principale (104) et munie d'au moins un premier élément de contact électrique (112) sur lequel au moins un signal de mesure du capteur (102) est apte à être obtenu ;
- un support (114) comprenant une première face principale (116) munie d'au moins un deuxième élément de contact électrique (120) relié électriquement au premier élément de contact électrique (112), une deuxième face principale (118) opposée à la première face principale (116) du support (114), et au moins une ouverture (124) traversant les première et deuxième faces principales (116, 118) du support (114) ;
- un capot (130) solidarisé à la deuxième face principale (110) du capteur (102) et délimitant, avec la deuxième face principale (110) du capteur (102), au moins une cavité (132) fermée hermétiquement en regard de laquelle est disposée au moins la partie sensible (106) du capteur (102) ;
dans lequel la deuxième face principale (110) du capteur (102) est solidarisée de manière étanche et/ou hermétique à la deuxième face principale (118) du support (114) au moins au niveau de la périphérie de l'ouverture (124) et telle qu'au moins une partie du premier élément de contact électrique (112) soit disposée en regard de et/ou dans l'ouverture (124), **caractérisé en ce que** la partie sensible (106) du capteur (102) est déportée latéralement par rapport à l'ouverture (124) du support (114) et n'est pas entourée par une région du capteur (102) solidarisée au support (114).

2. Dispositif (100) selon la revendication 1, dans lequel la deuxième face principale (118) du support (114) est destinée à être en contact avec le fluide.

3. Dispositif (100) selon l'une des revendications précédentes, dans lequel la partie sensible (106) du capteur (102) comporte au moins une membrane, le capteur (102) étant de type piézorésistif ou capacitif ou piézoélectrique ou thermique.

4. Dispositif (100) selon l'une des revendications précédentes, dans lequel la deuxième face principale (110) du capteur (102) est solidarisée à la deuxième face principale (118) du support (114) par au moins un cordon de scellement hermétique et/ou étanche (126) ou par collage direct.

5. Dispositif (100) selon l'une des revendications précédentes, dans lequel la deuxième face principale (118) du support (114) est solidarisée de manière hermétique et/ou étanche au capot (130) qui est solidarisé hermétiquement à la deuxième face principale (110) du capteur (102).

6. Dispositif (100) selon l'une des revendications précédentes, dans lequel le deuxième élément de contact électrique (120) est relié électriquement au premier élément de contact électrique (112) par au moins une liaison électrique (122, 162) traversant le capot (130).

7. Dispositif (100) selon l'une des revendications précédentes, comportant en outre au moins un matériau de protection (134) recouvrant au moins une partie de la deuxième face principale (110) du capteur (102) et au moins une partie du deuxième élément de contact électrique (120).

8. Dispositif (100) selon l'une des revendications précédentes, comportant en outre un élément de support (128) disposé entre le deuxième élément de contact électrique (120) et la première face principale (116) du support (114).

9. Dispositif (100) selon l'une des revendications précédentes, dans lequel :
- le support (114) fait partie d'au moins un boitier (136) entourant le capteur (102) en formant au moins un premier volume (138) dans lequel la partie sensible (106) du capteur (102) est disposée et un deuxième volume (140) dans lequel le premier élément de contact électrique (112) et une partie du deuxième élément de contact électrique (120) sont disposés,
- le support (114) et le capteur (102) forment une séparation hermétique et/ou étanche entre les premier et deuxième volumes (138, 140),
- le boitier (136) est muni d'au moins un orifice (142) débouchant dans le premier volume (138),
- le deuxième élément de contact électrique (120) traverse le boitier (136) et comporte une extrémité (144) disposée en dehors du boitier (136).

10. Dispositif (100) selon l'une des revendications 1 à 8, comportant en outre au moins un couvercle de protection (146) solidarisé à la première face principale (116) du support (114) et formant, avec le support (114) et le capteur (102), au moins un volume (148) dans lequel se trouvent le premier élément de contact électrique (112) et une partie du deuxième élément de contact électrique (120), le deuxième élément de contact électrique (120) traversant le support et comportant une extrémité disposée en dehors du volume.

11. Dispositif (100) selon la revendication 10, dans lequel le volume (148) formé par le couvercle de protection (146) est fermé hermétiquement et/ou de manière étanche, ou le couvercle de protection (146) est traversé par au moins un orifice (152) débouchant dans le volume (148).

12. Dispositif (100) selon l'une des revendications précédentes, dans lequel le deuxième élément de contact électrique (120) est relié électriquement au premier élément de contact électrique (112) par l'intermédiaire d'un élément électrique et/ou électronique (156) disposé sur la première face principale (116) du support (114).

13. Ensemble de mesure (200) comprenant au moins un dispositif de mesure (100) selon l'une des revendications précédentes et un conduit (202) dans lequel le fluide est apte à circuler, dans lequel la deuxième face principale (118) du support (114) du dispositif (100) de mesure est solidarisée hermétiquement et/ou de manière étanche à une extrémité ou à une paroi du conduit (202) telle que la partie sensible (106) du capteur (102) soit exposée à l'intérieur du conduit (202) par l'intermédiaire de l'extrémité ou d'une ouverture (201) formée dans la paroi du conduit (202).

14. Procédé de réalisation d'un dispositif (100) de mesure d'au moins une caractéristique d'un fluide (108), comprenant au moins les étapes suivantes :
- réalisation d'au moins un capteur (102) comprenant une première face principale (104) munie d'au moins une partie sensible (106) à ladite caractéristique et destinée à être en contact avec le fluide, et une deuxième face principale (110) opposée à la première face principale (104) et munie d'au moins un premier élément de contact électrique (112) sur lequel au moins un signal de mesure du capteur (102) est apte à être obtenu ;
- réalisation d'au moins un support (114) comprenant une première face principale (116) munie d'au moins un deuxième élément de contact électrique (120), une deuxième face principale (118) opposée à la première face principale (116) du support (114), et au moins une ouverture (124) traversant les première et deuxième faces principales (116, 118) du support (114) ;
- solidarisation d'un capot (130) à la deuxième face principale (110) du capteur (102) et délimitant, avec la deuxième face principale (110) du capteur (102), au moins une cavité (132) fermée hermétiquement en regard de laquelle est disposée au moins la partie sensible (106) du capteur (102) ;
- solidarisation hermétique et/ou étanche de la deuxième face principale (110) du capteur (102) à la deuxième face principale (118) du support (114) au moins au niveau de la périphérie de l'ouverture (124), telle qu'au moins une partie du premier élément de contact électrique (112) soit disposée en regard de et/ou dans l'ouverture (124) ;
- réalisation d'une liaison électrique (122, 162) reliant électriquement le deuxième élément de contact électrique (120) au premier élément de contact électrique (112) ;
**caractérisé en ce que** la partie sensible (106) du capteur (102) est déportée latéralement par rapport à l'ouverture (124) du support (114) et n'est pas entourée par une région du capteur (102) solidarisée au support (114).

## Patentansprüche

1. Vorrichtung (100) zur Messung zumindest einer Eigenschaft eines Fluids (108), zumindest enthaltend:
- einen Sensor (102), der eine erste Hauptfläche (104) aufweist, die mit zumindest einem Teil (106) versehen ist, der für diese Eigenschaft empfindlich und dazu ausgelegt ist, mit dem Fluid in Kontakt zu stehen, sowie eine zweite Hauptfläche (110), die der ersten Hauptfläche (104) gegenüberliegt und mit zumindest einem ersten elektrischen Kontaktelement (112) versehen ist, an dem zumindest ein Messsignal des Sensors (102) erhalten werden kann;
- einen Träger (114), der eine erste Hauptfläche (116) aufweist, die mit zumindest einem zweiten elektrischen Kontaktelement (120) versehen ist, das elektrisch mit dem ersten elektrischen Kontaktelement (112) verbunden ist, sowie eine zweite Hauptfläche (118), die der ersten Hauptfläche (116) des Trägers (114) gegenüberliegt, und zumindest eine Öffnung (124), die durch die erste und die zweite Hauptfläche (116, 118) des Trägers (114) verläuft;
- eine Abdeckung (130), die fest mit der zweiten Hauptfläche (110) des Sensors (102) verbunden ist und mit der zweiten Hauptfläche (110) des Sensors (102) zumindest einen hermetisch verschlossenen Hohlraum (132) begrenzt, gegenüber dem zumindest der empfindliche Teil (106) des Sensors (102) angeordnet ist;
wobei die zweite Hauptfläche (110) des Sensors (102) zumindest im Bereich des Umfangs der Öffnung (124) dicht und/oder hermetisch mit der zweiten Hauptfläche (118) des Trägers (114) fest verbunden ist, derart, dass zumindest ein Teil des ersten elektrischen Kontaktelements (112) gegenüber und/oder in der Öffnung (124) angeordnet ist,
**dadurch gekennzeichnet, dass**
der empfindliche Teil (106) des Sensors (102) bezüglich der Öffnung (124) des Trägers (114) seitlich versetzt ist und nicht von einem fest mit dem Träger (114) verbundenen Bereich des Sensors (102) umgeben ist.

2. Vorrichtung (100) nach Anspruch 1,
wobei die zweite Hauptfläche (118) des Trägers (114) dazu bestimmt ist, mit dem Fluid in Kontakt zu stehen.

3. Vorrichtung (100) nach einem der vorangehenden Ansprüche,
wobei der empfindliche Teil (106) des Sensors (102) zumindest eine Membran enthält, wobei der Sensor (102) vom piezoresistiven oder kapazitiven oder piezoelektrischen oder thermischen Typ ist.

4. Vorrichtung (100) nach einem der vorangehenden Ansprüche,
wobei die zweite Hauptfläche (110) des Sensors (102) über zumindest einen hermetischen und/oder dichten Abdichtungsstrang (126) oder durch direktes Verkleben fest mit der zweiten Hauptfläche (118) des Trägers (114) verbunden ist.

5. Vorrichtung (100) nach einem der vorangehenden Ansprüche,
wobei die zweite Hauptfläche (118) des Trägers (114) hermetisch und/oder abgedichtet fest mit der Abdeckung (130) verbunden ist, die hermetisch mit der zweiten Hauptfläche (110) des Sensors (102) fest verbunden ist.

6. Vorrichtung (100) nach einem der vorangehenden Ansprüche,
wobei das zweite elektrische Kontaktelement (120) über zumindest eine durch die Abdeckung (130) verlaufende elektrische Verbindung (122, 162) elektrisch mit dem ersten elektrischen Kontaktelement (112) verbunden ist.

7. Vorrichtung (100) nach einem der vorangehenden Ansprüche,
ferner enthaltend zumindest ein Schutzmaterial (134), das zumindest einen Teil der zweiten Hauptfläche (110) des Sensors (102) und zumindest einen Teil des zweiten elektrischen Kontaktelements (120) bedeckt.

8. Vorrichtung (100) nach einem der vorangehenden Ansprüche,
ferner enthaltend ein Tragelement (128), das zwischen dem zweiten elektrischen Kontaktelement (120) und der ersten Hauptfläche (116) des Trägers (114) angeordnet ist.

9. Vorrichtung (100) nach einem der vorangehenden Ansprüche,
wobei
- der Träger (114) zu mindestens einem Gehäuse (136) gehört, das den Sensor (102) umgibt und dabei zumindest einen ersten Raum (138) bildet, in welchem der empfindliche Teil (106) des Sensors (102) angeordnet ist, sowie einen zweiten Raum (140), in welchem das erste elektrische Kontaktelement (112) und ein Teil des zweiten elektrischen Kontaktelements (120) angeordnet sind,
- der Träger (114) und der Sensor (102) eine hermetische und/oder dichte Trennung zwischen dem ersten und dem zweiten Raum (138, 140) bildet,
- das Gehäuse (136) mit zumindest einer Öffnung (142) versehen ist, die in den ersten Raum (138) mündet,
- das zweite elektrische Kontaktelement (120) durch das Gehäuse (136) hindurch verläuft und ein Ende (144) aufweist, das außerhalb des Gehäuses (136) angeordnet ist.

10. Vorrichtung (100) nach einem der Ansprüche 1 bis 8,
ferner enthaltend zumindest einen Schutzdeckel (146), der fest mit der ersten Hauptfläche (116) des Trägers (114) verbunden ist und mit dem Träger (114) und dem Sensor (102) zumindest einen Raum (148) bildet, in welchem sich das erste elektrische Kontaktelement (112) und ein Teil des zweiten elektrischen Kontaktelements (120) befinden, wobei das zweite elektrische Kontaktelement (120) durch den Träger hindurch verläuft und ein Ende aufweist, das außerhalb des Raums angeordnet ist.

11. Vorrichtung (100) nach Anspruch 10,
wobei der aus dem Schutzdeckel (146) gebildete Raum (148) hermetisch und/oder dicht verschlossen ist, oder der Schutzdeckel (146) von zumindest einer Öffnung (152) durchsetzt wird, die in den Raum (148) mündet.

12. Vorrichtung (100) nach einem der vorangehenden Ansprüche,
wobei das zweite elektrische Kontaktelement (120) über ein elektrisches und/oder elektronisches Element (156), das an der ersten Hauptfläche (116) des Trägers (114) angeordnet ist, elektrisch mit dem ersten Kontaktelement (112) verbunden ist.

13. Messanordnung (200) mit zumindest einer Messvorrichtung (100) nach einem der vorangehenden Ansprüche und mit einer Leitung (202), in welcher das Fluid strömen kann, wobei die zweite Hauptfläche (118) des Trägers (114) der Messvorrichtung (100) hermetisch und/oder abgedichtet mit einem Ende oder einer Wand der Leitung (202) fest verbunden ist, derart, dass der empfindliche Teil (106) des Sensors (102) über das Ende oder über eine in der Wand der Leitung (202) ausgebildete Öffnung (201) dem Innenraum der Leitung (202) ausgesetzt ist.

14. Verfahren zum Herstellen einer Messvorrichtung (100) zur Messung zumindest einer Eigenschaft eines Fluids (108), umfassend zumindest die nachstehenden Schritte:
- Ausbilden von zumindest einem Sensor (102), der eine erste Hauptfläche (104) aufweist, die mit zumindest einem Teil (106) versehen ist, der für diese Eigenschaft empfindlich und dazu bestimmt ist, mit dem Fluid in Kontakt zu stehen, sowie eine zweite Hauptfläche (110), die der ersten Hauptfläche (104) gegenüberliegt und mit zumindest einem ersten elektrischen Kontaktelement (112) versehen ist, an dem zumindest ein Messsignal des Sensors (102) erhalten werden kann;
- Ausbilden von zumindest einem Träger (114), der eine erste Hauptfläche (116) aufweist, die mit zumindest einem zweiten elektrischen Kontaktelement (120) versehen ist, sowie zweite Hauptfläche (118), die der ersten Hauptfläche (116) des Trägers (114) gegenüberliegt, und zumindest eine Öffnung (124), die durch die erste und die zweite Hauptfläche (116, 118) des Trägers (114) verläuft;
- festes Verbinden einer Abdeckung (130) mit der zweiten Hauptfläche (110) des Sensors (102), die mit der zweiten Hauptfläche (110) des Sensors (102) zumindest einen hermetisch verschlossenen Hohlraum (132) begrenzt, gegenüber dem zumindest der empfindliche Teil (106) des Sensors (102) angeordnet ist;
- hermetisches und/oder abgedichtetes, festes Verbinden der zweiten Hauptfläche (110) des Sensors (102) zumindest im Bereich des Umfangs der Öffnung (124) mit der zweiten Hauptfläche (118) des Trägers (114), derart, dass zumindest ein Teil des ersten elektrischen Kontaktelements (112) gegenüber und/oder in der Öffnung (124) angeordnet ist;
- Herstellen einer elektrischen Verbindung (122, 162), welche das zweite elektrische Kontaktelement (120) elektrisch mit dem ersten elektrischen Kontaktelement (112) verbindet;
**dadurch gekennzeichnet, dass**
der empfindliche Teil (106) des Sensors (102) bezüglich der Öffnung (124) des Trägers (114) seitlich versetzt ist und nicht von einem fest mit dem Träger (114) verbundenen Bereich des Sensors (102) umgeben ist.

## Claims

1. Device (100) for measuring at least one characteristic of a fluid (108), comprising at least:
- a sensor (102) comprising a first main face (104) provided with at least one sensing part (106) that is sensitive to said characteristic and intended to be in contact with the fluid, and a second main face (110) opposite the first main face (104) and provided with at least one first electrical contact element (112) on which at least one measurement signal from the sensor (102) can be obtained;
- a support (114) comprising a first main face (116) provided with at least one second electrical contact element (120) electrically connected to the first electrical contact element (112), a second main face (118) opposite the first main face (116) of the support (114), and at least one opening (124) passing through the first and second main faces (116, 118) of the support (114);
- a cap (130) attached to the second main face (110) of the sensor (102) and delimiting, with the second main face (110) of the sensor (102), at least one cavity (132) that is hermetically closed and facing which is arranged at least the sensing part (106) of the sensor (102);
wherein the second main face (110) of the sensor (102) is attached in a watertight and/or hermetically-sealed manner to the second main face (118) of the support (114) at least at the periphery of the opening (124), and such that at least one part of the first electrical contact element (112) is arranged facing and/or inside the opening (124),
**characterized in that**
the sensing part (106) of the sensor (102) is laterally offset relative to the opening (124) of the support (114) and is not surrounded by a region of the sensor (102) attached to the support (114).

2. Device (100) according to claim 1, wherein the second main face (118) of the support (114) is intended to be in contact with the fluid.

3. Device (100) according to one of the previous claims, wherein the sensing part (106) of the sensor (102) comprises at least one membrane, whereby the sensor (102) is a piezoresistive or capacitive or piezoelectric or heat sensor.

4. Device (100) according to one of the previous claims, wherein the second main face (110) of the sensor (102) is attached to the second main face (118) of the support (114) by at least one hermetic and/or watertight sealed seam (126) or by direct bonding.

5. Device (100) according to one of the previous claims, wherein the second main face (118) of the support (114) is attached in a hermetically-sealed and/or watertight manner to the cap (130), which is hermetically attached to the second main face (110) of the sensor (102).

6. Device (100) according to one of the previous claims, wherein the second electrical contact element (120) is electrically connected to the first electrical contact element (112) by at least one electrical connection (122, 162) passing through the cap (130).

7. Device (100) according to one of the previous claims, further comprising at least one protective material (134) covering at least one part of the second main face (110) of the sensor (102) and at least one part of the second electrical contact element (120).

8. Device (100) according to one of the previous claims, further comprising a supporting element (128) arranged between the second electrical contact element (120) and the first main face (116) of the support (114).

9. Device (100) according to one of the previous claims, wherein:
- the support (114) forms a part of at least one housing (136) surrounding the sensor (102) by forming at least one first volume (138) in which the sensing part (106) of the sensor (102) is arranged and a second volume (140) in which the first electrical contact element (112) and one part of the second electrical contact element (120) are arranged,
- the support (114) and the sensor (102) form a hermetically-sealed and/or watertight separation between the first and second volumes (138, 140),
- the housing (136) is provided with at least one orifice (142) opening out into the first volume (138),
- the second electrical contact element (120) passes through the housing (136) and comprises an end (144) arranged outside of the housing (136).

10. Device (100) according to one of claims 1 to 8, further comprising at least one protective cover (146) attached to the first main face (116) of the support (114) and forming, with the support (114) and the sensor (102), at least one volume (148) in which the first electrical contact element (112) and a part of the second electrical contact element (120) are located, whereby the second electrical contact element (120) passes through the support and comprises an end arranged outside the volume.

11. Device (100) according to claim 10, wherein the volume (148) formed by the protective cover (146) is closed in a hermetically-sealed and/or watertight manner, or the protective cover (146) is penetrated by at least one orifice (152) opening out into the volume (148).

12. Device (100) according to one of the previous claims, wherein the second electrical contact element (120) is electrically connected to the first electrical contact element (112) by way of an electrical and/or electronic element (156) arranged on the first main face (116) of the support (114).

13. Measuring assembly (200) comprising at least one measuring device (100) according to one of the previous claims, and a duct (202) in which the fluid can circulate, wherein the second main face (118) of the support (114) of the measuring device (100) is attached in a hermetically-sealed and/or watertight manner to one end or to one wall of the duct (202) such that the sensing part (106) of the sensor (102) is exposed to the interior of the duct (202) by way of the end or by way of an opening (201) formed in the wall of the duct (202).

14. Method for producing a device (100) for measuring at least one characteristic of a fluid (108), comprising at least the steps of:
- producing at least one sensor (102) comprising a first main face (104) provided with at least one sensing part (106) that is sensitive to said characteristic and intended to be in contact with the fluid, and a second main face (110) opposite the first main face (104) and provided with at least one first electrical contact element (112) on which at least one measurement signal from the sensor (102) can be obtained;
- producing at least one support (114) comprising a first main face (116) provided with at least one second electrical contact element (120), a second main face (118) opposite the first main face (116) of the support (114), and at least one opening (124) passing through the first and second main faces (116, 118) of the support (114);
- attaching a cap (130) to the second main face (110) of the sensor (102) and delimiting, with the second main face (110) of the sensor (102), at least one cavity (132) that is hermetically closed and facing which is arranged at least the sensing part (106) of the sensor (102);
- attaching in a hermetically-sealed and/or watertight manner the second main face (110) of the sensor (102) to the second main face (118) of the support (114) at least at the periphery of the opening (124), such that at least one part of the first electrical contact element (112) is arranged facing and/or inside the opening (124);
- producing an electrical connection (122, 162) electrically connecting the second electrical contact element (120) to the first electrical contact element (112);
**characterized in that**
the sensing part (106) of the sensor (102) is laterally offset relative to the opening (124) of the support (114) and is not surrounded by a region of the sensor (102) attached to the support (114).
